# EUROPEAN PATENT SPECIFICATION

(11) **EP 3 833 228 B1**
(45) Date of publication and mention of the grant of the patent: **06.12.2023**
(21) Application number: 20808183.6
(22) Date of filing: 09.10.2020
(51) Int. Cl.: A47J 31/52, A47J 42/40

(54) **ARRANGEMENT COMPRISING AN ESPRESSO COFFEE MACHINE AND A COFFEE GRINDER**
ANORDNUNG MIT EINER ESPRESSOKAFFEEMASCHINE UND EINER KAFFEEMÜHLE
AGENCEMENT COMPRENANT UNE MACHINE À CAFÉ EXPRESSO ET UN MOULIN À CAFÉ

(30) Priority: 11.10.2019 IT 201900018605
(43) Date of publication of application: 16.06.2021
(73) Proprietor: Rancilio Group S.p.A., 20015 Parabiago (MI) (IT)
(72) Inventor: RAIMONDI, Stefano, 20015 Parabiago (MI) (IT); LOCATI, Valerio, 20015 Parabiago (MI) (IT)
(74) Representative: Robba, Pierpaolo
(86) International application number: PCT/IB2020/059498
(87) International publication number: WO 2021/070130

(56) References cited:
- EP-A1- 2 314 188
- AU-A1- 2012 238 276
- US-A1- 2003 129 286

## Description

### Technical Field

The present invention relates to an arrangement comprising an espresso coffee machine and a coffee grinder.

More particularly, the present invention relates to an arrangement comprising a coffee grinder and an espresso coffee machine of the so-called "semi-automatic" type, i.e. of the type comprising one or more brewing groups and, for each brewing group, a filter holder adapted to contain a predetermined dose of coffee powder.

### Background Art

Espresso coffee machines are known that comprise at least one brewing group for the coffee-based drink and, for each brewing group, a removable filter holder adapted to contain a desired dose of coffee powder, and a plurality of buttons for selecting the drink to be brewed by the corresponding brewing group.

It is also known to associated one or more coffee grinders to the coffee machine, each coffee grinder including a hopper arranged to contain the coffee beans to be ground, a dosing device and a grinding chamber for obtaining coffee powder from the coffee beans, the coffee powder being then discharged from the grinding chamber into a filter holder of the coffee machine.

Quantity and particle size of the coffee powder can be adjusted by adjusting the grinding time and the configuration of the grinding chamber (in particular, the distance between the grinder blades).

The possibility of adjusting the quantity and particle size of the coffee powder obtained in the coffee grinder is important because the coffee machine is usually configured so as to allow preparing different coffee-based drinks (different recipes), which may require different quantities of coffee powder and/or coffee powder with a specific particle size.

It is also possible that the same recipe can be prepared starting from differently roasted coffee beans or from decaffeinated coffee, or also by using single or double doses.

The same filter holder of the coffee machine can therefore be filled with coffee powder with different quantities and characteristics according to the consumer's order.

In the case where the quantity and/or the characteristics of the coffee powder dispensed by the coffee grinder differ from those required by the selected recipe, the resulting drink will have characteristics different from the desired ones, this causing consumers' dissatisfaction.

Since the coffee machines of the type described above are usually employed in commercial establishments, such as bars and restaurants, the consumers' (i.e. the clients') dissatisfaction and the resulting need to re-prepare the coffee-based drink, will result in time losses, economical losses and a negative image return.

In order to obviate this drawback, the document EP 2 314 188 aims at providing an arrangement allowing filling of a filter holder of a coffee machine in an accurate and reliable manner, in terms of both the quantity (dose) of coffee powder necessary for a selected recipe and the characteristics required for said coffee powder to prepare said recipe.

For this purpose, the document EP 2 314 188 describes an arrangement comprising a coffee machine and a coffee grinder, wherein:
- the coffee machine comprises a plurality of brewing groups, each brewing group having a respective filter holder and a plurality of buttons corresponding to the different coffee-based drinks that can be selected and prepared by the coffee machine;
- the coffee machine further comprises an electronic board equipped with short-range communication and radio communication devices;
- each filter holder bears a code (for example, a barcode) that can be recognized by the electronic board of the coffee machine;
- the coffee grinder comprises a grinding chamber for grinding the coffee beans and obtaining coffee powder to be dispensed to a filter holder;
- the coffee grinder further comprises an electronic board capable of recognizing the code of each filter holder and equipped with short-range communication and radio communication devices compatible with the short-range communication and radio communication devices of the electronic board of the coffee machine.

Said arrangement may also comprise several coffee machines and several coffee grinders, for example with different starting coffee beans and different grinding settings.

In such arrangement, the operator using a brewing group of the coffee machine selects a certain recipe for a coffee-based drink, and the characteristics required for preparing said coffee-based drink are transmitted from the coffee machine to the coffee grinder.

When the filter holder of the aforesaid brewing group is placed onto the support located under the grinding chamber of the coffee grinder, the filter holder is recognized by the coffee grinder, which therefore dispenses the desired dose of coffee powder with the desired characteristics.

When the filter holder is brought back to its brewing group, the filter holder is recognized by the coffee machine, which therefore "knows" that the coffee powder contained in said filter holder has the correct quantity and quality and can thus start brewing the drink.

In the arrangement described in EP 2 314 188, errors in preparing the coffee powder necessary for a selected recipe are avoided thanks to the fact that the coffee grinder recognizes the code of the filter holder and dispenses the coffee powder only if the filter holder corresponds with the brewing group corresponding to the request received from the coffee machine, and to the fact that also the coffee machine recognizes the code of the filter holder and starts brewing the coffee powder only if the filter holder is positioned in the respective brewing group and not in another brewing group for which a different recipe might have been selected.

Although the arrangement described above may in fact prove useful to avoid errors in the preparation of the various coffee-based recipes, it has limitations.

In particular, in said arrangement each filter holder is uniquely related to a respective brewing group and cannot function except when applied to said brewing group.

This can lead to time losses if, for example, in very chaotic situations with several operators working on the coffee machine at the same time, one operator forgets from which brewing group he/she picked up the filter holder.

In addition, if a filter holder breaks, the corresponding brewing group automatically becomes unusable, and vice versa.

The document US 2003/0129286 describes an arrangement and a method for storing and communicating information relating to the preparation of a drink, such as the recipe of the drink itself. The arrangement described in US 2003/0129286 comprises a machine for preparing drinks, such as, for example, a coffee machine, a device for dispensing the raw material for the drink, such as, for example, a coffee grinder, and one or more funnels that can be coupled to the coffee grinder in order to be loaded with said raw material (i.e., coffee powder) and subsequently coupled to said coffee machine for proceeding to the preparation of the coffee-based drink.

The arrangement can prepare different coffee-based drinks, each with its own recipe. The funnel (or each funnel) is equipped with a memory unit and the coffee grinder and the coffee machine are equipped with respective communication means for reading said memory, as well as with respective control units for controlling the respective operations required for preparing the correct coffee-based drink based on the data read from the memory unit of the funnel.

In the described arrangement, the memory unit associated with the funnel contains the minimum basic information relating to the type and quantity of the drink selected by the user. The communication means of the coffee grinder read said basic information from the memory unit and, based on the type and quantity of the drink selected by the user, the control unit of the coffee grinder draws the corresponding recipe from its memory and controls the parameters of the grinder (grinding time, distance between the grinding parts, etc.) in order for the correct quantity of coffee powder with the required characteristics to be dispensed. When the funnel is subsequently associated with the coffee machine, the communication means of the coffee machine read the basic information about the drink to be brewed from the memory unit of the funnel and, based on the type and quantity of the drink selected by the user, the control unit of the coffee machine draws the corresponding recipe from its memory and controls the parameters of the coffee machine (water temperature and pressure, brewing time, etc.) in order for the correct drink to be brewed.

In the described arrangement, although some information is stored in the memory of the funnel, the coffee grinder and the coffee machine contain each the part of recipe of the drink to be prepared containing the instructions concerning the operations to be carried out by them. For example, the memory of the control unit of the coffee grinder contains the part of recipe corresponding to the instructions for the correct dose of the coffee powder, whereas the memory of the control unit of the coffee machine contains the part of recipe corresponding to the instructions for correctly brewing the drink starting from said coffee powder dose.

Therefore, in the described arrangement, the coffee grinder and the coffee machine execute each their own part of recipe without any control or check over the remaining part of the recipe. In other words, if for some reason the coffee grinder dispenses a dose of coffee powder that does not have the correct characteristics, the coffee machine will still execute its part of the recipe, thus obtaining as a final result a drink that does not correspond to the desired one.

The object of the present invention is to provide an arrangement that comprises an espresso coffee machine and a coffee grinder and is alternative to the arrangements described above and capable to overcome the limitations thereof.

This and other objects are achieved by the arrangement as claimed in the appended claims.

### Summary of Invention

The invention relates to an arrangement comprising at least one espresso coffee machine and at least one coffee grinder, wherein:
- the coffee machine comprises a plurality of brewing groups, each brewing group having a plurality of buttons corresponding to the different coffee-based drinks that can be selected and prepared by the coffee machine;
- the coffee machine further comprises a corresponding plurality of filter holder assemblies, each comprising a filter holder and a respective filter;
- the coffee machine further comprises an electronics equipped with communication devices;
- at least one filter holder assembly - preferably each filter holder assembly - comprises an electronics equipped with a memory in which the parameters of the different recipes of coffee-based drinks are stored, as well as with communication devices able to communicate with the communication devices of the electronics of the coffee machine;
- the coffee grinder comprises a grinding chamber for grinding the coffee beans and obtaining coffee powder to be dispensed to a filter holder assembly;
- the coffee grinder further comprises an electronics equipped with communication devices,
wherein the communication devices of said at least one filter holder assembly - preferably of each filter holder assembly - are able to communicate with the communication devices of the electronics of the coffee grinder.

In the arrangement according to the invention, it is thus the filter holder assembly that contains the data concerning the different recipes and each time it is inserted into a device adapted for communication (in particular the coffee machine or the coffee grinder), it communicates the data necessary for the preparation of the selected recipe to this device.

The electronics can be provided in any part of the filter holder assembly; for example, it may be provided in the filter holder, but it may also be provided in the filter carried by said filter holder, or in another accessory associated with the filter holder.

In particular, initially, with the filter holder assembly connected to the coffee machine, it receives the consumer's selection from said coffee machine or another dedicated tool (e.g. a mobile device such as a tablet, a smartphone, etc.).

When subsequently the filter holder assembly is connected to the coffee grinder, it communicates to said coffee grinder the characteristics that the coffee powder necessary for the preparation of the selected recipe must have, in particular in terms of weight, particle size, pressing and the like.

When subsequently the filter holder assembly is connected again to the coffee machine, the filter holder assembly communicates the data necessary for brewing the desired drink, in particular in terms of quantity, pressure, flow rate and temperature of the water used for brewing.

Advantageously, thanks to the fact that the filter holder assembly has its own electronics, the filter holder assembly can communicate with devices other than the coffee machine and the coffee grinder, such as, for example, an automatic weighing device, an automatic presser, an external management and control unit, which may present in the arrangement.

To this aim, each of said devices (automatic weighing device, automatic presser, etc.) comprises an electronics equipped with communication devices, and the communication devices of the filter holder assembly are able to communicate with the communication devices of the electronics of such devices in order to communicate to said devices which operations they have to carry out to match the selected recipe.

In a preferred embodiment of the invention, at each brewing, the electronics of the filter holder assembly checks whether the parameters of the recipe stored therein are met, and, if they are not met, uses the error data to communicate to the coffee machine and/or to the coffee grinder the corrective actions to be taken for a subsequent brewing.

Advantageously, in the arrangement according to the invention, the filter holder assembly is not restrained to a specific brewing group, but it can be used in any brewing group of the coffee machine, because it can communicate each time to the coffee machine the settings required for the correct preparation of the selected coffee-based drink, regardless of the brewing group in which it is inserted. Another advantage of the invention, in comparison with the known arrangement described above, is that a filter holder assembly communicates with a device (coffee machine, coffee grinder ...) solely when it is inserted therein. This eliminates remote communications and the associated need for channel encoding to avoid interference between different and simultaneous communications.

The present invention finds application in arrangements comprising a coffee grinder and an espresso coffee machine, in particular an espresso coffee machine of the so-called "semi-automatic" type.

In this connection, it is to be noted that, whereas the arrangement described in US 2003/0129286 comprises a funnel of considerable size having a memory unit including a limited amount of basic information, the invention provides that a filter holder assembly of reduced size contains the whole data relating to the different recipes of the drinks that can be prepared by the arrangement.

### Brief Description of Drawings

Further features and advantages of the invention will become apparent from the following detailed description of some preferred embodiments of the invention, which are given by way of non-limiting example with reference to the annexed drawings, in which:
Figure 1 shows an espresso coffee machine of the arrangement according to the invention.
Figure 2 schematically shows a coffee grinder according to the invention.
Figure 3 schematically shows the overall architecture of the arrangement according to the invention.

### Description of Embodiments

The invention relates to an arrangement comprising at least one espresso coffee machine and at least one coffee grinder.

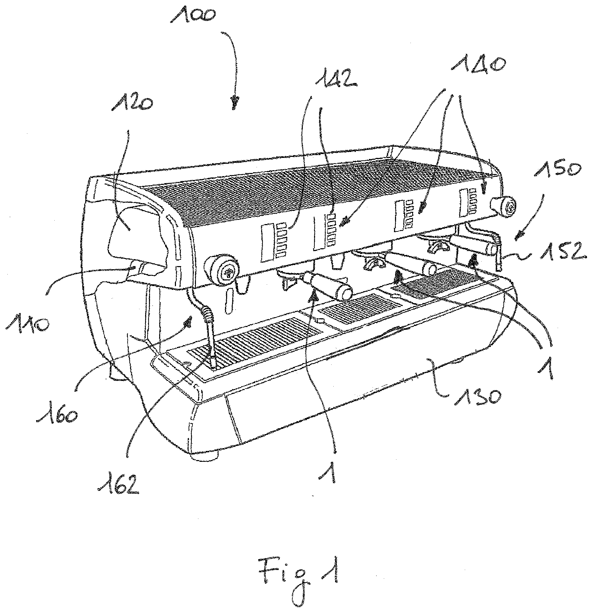

Referring at first to Figure 1, there is shown schematically an espresso coffee machine 100 of the arrangement according to the invention.

In a manner known per se, said coffee machine 100 comprises a frame 110, a boiler 120 intended for generating hot water and mounted to said frame, and a body 130 fixed to said frame and adapted to receive the boiler and to give the coffee machine a certain overall shape.

The coffee machine further comprises one or more brewing groups 140, each being in fluid communication with the boiler 120 and being provided with a series of buttons 142 by means of which the operator can select a particular coffee-based drink that has been ordered by a consumer.

The coffee machine further comprises corresponding filter holder assemblies 1, each of which includes at least one filter holder 1' and one filter 1" held by said filter holder and arranged to contain the desired dose of coffee powder.

The filter holder assemblies 1 may further include additional accessories, such as, for example, a blind filter for periodically carrying out a cleaning cycle of the coffee machine.

When an order for brewing a coffee is imparted, hot water coming from the boiler 120 is passed through the coffee powder contained in the filter 1" held by the filter holder 1' and the coffee thus obtained is collected in an underlying cup.

Generally, the coffee machine 100 may also comprise a hot water delivery station 150 equipped with a delivery tube 152 in fluid communication with the boiler 120, which can be used, for example, for preparing teas and infusions, as well as a station intended for whipping and frothing milk 160 for the preparation of hot frothed milk and comprising a steam wand 162 for introducing steam, possibly mixed with pressurized air, into the milk.

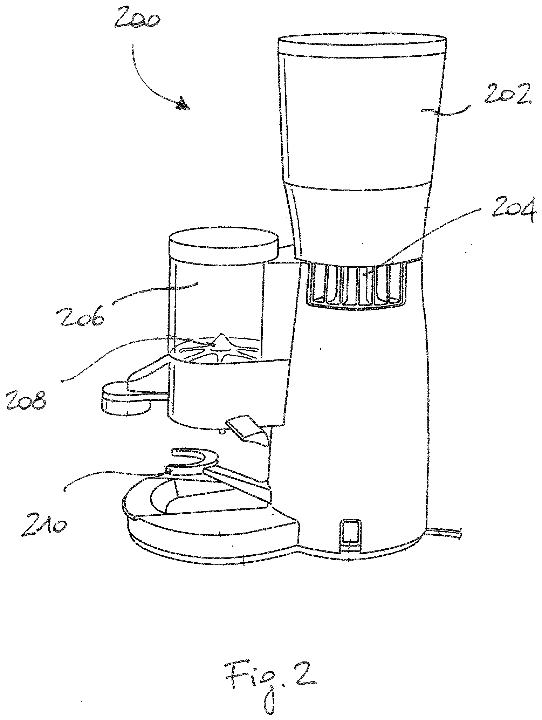

In order to obtain a drink with satisfactory organoleptic characteristics, the coffee used is preferably ground immediately before use and for this reason at least one coffee grinder 200, schematically shown in Figure 2, is associated with the at least one coffee machine 100 of the arrangement according to the invention.

Said coffee grinder 200 includes a hopper 202 for the coffee beans, which are transferred by gravity to a grinding chamber 204.

In a manner known per se, inside the grinding chamber 204 there is/are provided one or more grinder blades that can be powered by a motor (for example, an electrical motor) and mutually cooperate to grind the coffee beans coming from the hopper 202 and turn them into coffee powder. Said grinder blades are preferably two in number, with or without motorized movement, and can be, for example, flat grinder blades or conical grinder blades.

From the grinding chamber 204, the coffee powder is transferred, again by gravity, to a second hopper 206, provided with dosing means 208 enabling proper dispensing of the amount of coffee required for preparing the desired drink into the filter 1" of a filter holder 1' of the coffee machine 100. To this aim, said filter holder 1' can be accommodated on a support 210 arranged under the second hopper 206. As anticipated above, generally the coffee machine 100 must be able to prepare different types of coffee-based drinks, i.e. to execute different "recipes".

Each recipe will be distinguished by the type of coffee used, the quantity of coffee powder used and its particle size, the pressure, temperature and flow rate of the water used, and so on.

Since espresso coffee machines of the type shown in Figure 1 are mainly used in commercial establishments, such as bars and restaurants, it is usual that several coffee-based drinks - possibly of different types - are ordered at the same time and that several operators operate simultaneously on the same coffee machine.

It is therefore necessary to implement an architecture for an arrangement comprising at least one coffee machine 100 and at least one coffee grinder 200 that allows avoiding errors and guarantees that a brewing group of the coffee machine 100 actually brews the drink corresponding to the operator's selection.

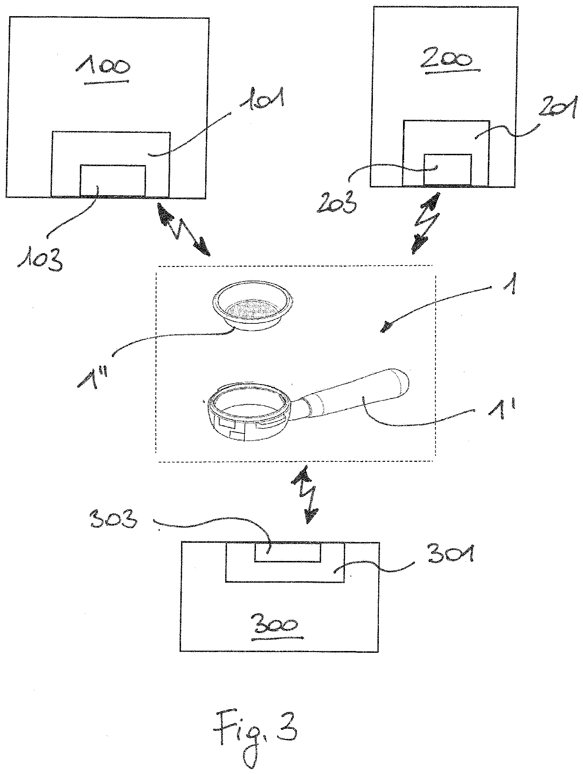

For this purpose, the arrangement according to the invention adopts the architecture schematically shown in Figure 3.

According to the invention:
- the coffee machine 100 comprises an electronics 101 equipped with communication devices 103;
- the coffee grinder 200 comprises in turn an electronics 201 equipped with communication devices 203; and
- at least one filter holder assembly 1 - and preferably each filter holder assembly 1 - comprises an electronics 11 equipped with a memory 15, in which there are stored the parameters of the different recipes of coffee-base drinks that can be executed by the coffee machine, and with communication devices 13 that are able to communicate with the communication devices 103 of the electronics 101 of the coffee machine 100 and are also able to communicate with the communication devices 203 of the electronics 201 of the coffee grinder 200.

In the arrangement according to the invention, it is therefore each filter holder assembly 1 that contains the data concerning the different recipes that can be prepared by the arrangement, for both the part concerning the operations to be carried out by the coffee grinder 200 and the part concerning the operations to be carried out by the coffee machine 100.

The electronics can be provided either in the filter holder 1' or in the filter 1". It may possibly be provided in a further accessory of the filter holder assembly 1.

In Figure 3, the electronics is provided at the front part of the filter holder 1'; this configuration is advantageous when the front part of the filter holder is the portion of the filter holder that is closest to the device (coffee machine, coffee grinder and so on) with which the filter holder must communicate.

However, this location of the electronics 11 must not be understood in a limiting sense, and the electronics might be located in any other part of the filter holder 1', for example in the handle.

In addition, as anticipated above, the electronics 11 may also be provided in the filter 1" of the filter holder assembly 1.

Whenever a filter holder assembly 1 is inserted into an device adapted to communication (in particular, the coffee machine 100 or the coffee grinder 200), the filter holder assembly communicates to said device the data necessary for preparing the selected recipe.

Advantageously, thanks to the fact that the filter holder assembly has its own electronics, the filter holder assembly 1 can communicate with devices other than the coffee machine and the coffee grinder, such as, for example, an external management and control unit 300, which will in turn be provided with an electronics 301 equipped with communication devices 303 able to communicate with the communication devices 13 of the electronics of the filter holder assembly 1.

For example, a filter holder assembly 1 will be able to receive, from the external management and control unit 300, the parameters of new recipes for coffee-based drinks and/or may transmit, to said external management and control unit 300, historical and statistical data on the preparation of the different recipes.

The operation of the arrangement according to the invention can be summarized as follows.

At first, the filter holder assembly 1 is connected to the coffee machine 100, in particular it is inserted into any of the brewing groups of the coffee machine 100.

The electronics of each filter holder assembly will contain, in its memory, the recipe of one or more coffee-based drinks that can be prepared by the coffee machine 100.

The consumer makes his/her order and the operator selects the corresponding drink.

This selection can be effected starting from the coffee machine 100 or also from an external device, including a mobile device such as a smartphone or a tablet.

When the filter holder assembly 1 is connected to the coffee grinder 200 and inserted on the support 210 of said coffee grinder, the electronics 11 of the filter holder assembly communicates with the electronics 201 of the coffee grinder.

According to a first possible embodiment, the coffee grinder enables only those selection buttons that correspond to one of the recipes stored in the memory 15 of the filter holder assembly 1. The operator will then effect the selection, among the enabled buttons, of the option corresponding to the desired drink.

According to a second, more sophisticated embodiment of the invention, the electronics 11 of the filter holder assembly 1 communicates directly to the electronics of the coffee grinder the characteristics that the coffee powder necessary for the preparation of the selected recipe must have, in particular in terms of weight, particle size, pressing and the like.

In both cases, the settings of the grinding chamber (grinding time, distance between the grinder blades, etc.) will be modified accordingly based on the instructions received from the operator or directly from the filter holder assembly.

Once the filter holder assembly 1 has been filled with the dose of coffee powder, it is again connected to the coffee machine 100.

In this connection, it should be noted that the filter holder assembly could be inserted into any brewing group 140 of the coffee machine 100, possibly also in a brewing group different from the initial one. At this stage, the electronics 11 of the filter holder communicates with the electronics of the coffee machine.

In this case, too, in a first embodiment of the invention, only the buttons 142 of the brewing group 140 that were present in the memory 15 of the filter holder assembly 1 and correspond to one of the recipes stored therein are enabled for the operator. The operator will then proceed to the selection, among the enabled buttons, of the option corresponding to the desired drink.

According to a second, more sophisticated embodiment of the invention, the electronics of the filter holder assembly communicates directly to the electronics of the coffee machine the data necessary for brewing the desired drink, in particular in terms of pressure, flow rate and temperature of the water used for brewing.

In both cases, the settings of the coffee machine (in particular those of the boiler and those of the brewing group) will be modified accordingly based on the instructions received from the operator or directly from the filter holder assembly.

The drink thus brewed can be collected in an underlying mug or cup and served to the consumer.

It will be evident to the person skilled in the art that the invention advantageously provides that the recipe for the drink to be prepared is stored in the component (the filter holder assembly) that moves within the arrangement during the various preparation steps and is involved in all said preparation steps, and it is this component that acts as "master" for the other devices and devices (coffee machine, coffee grinder, ...) of the arrangement, which act as "slave" and just carry out the indicated actions. In a preferred embodiment of the invention, at each brewing, the electronics 11 of the filter holder assembly 1 checks whether the reference values of each parameter involved in the recipe (dose of coffee powder, particle size of the coffee powder, water temperature and pressure, etc.) stored in its memory 15 are met by the coffee machine 100 and by the coffee grinder 200.

In the event that the difference between an actual value recorded and the corresponding reference value is greater than a predetermined threshold, the filter holder assembly 1 will be able to communicate with the device concerned, in order to impart instructions about the corrective actions to be taken for a subsequent brewing.

For example, if the actual particle size of the coffee powder were different from the reference value stored in the filter holder and required by the recipe, the filter holder assembly 1 would communicate with the coffee grinder 200 to instruct a change in the relative distance of the grinder blades in the grinding chamber 204 of the coffee grinder.

It will be evident to the person skilled in the art that the invention is not limited to the embodiment described in detail above and that numerous modifications and variations are possible without departing from the scope of protection defined in the accompanying claims.

In particular, although only one espresso coffee machine and only one coffee grinder are illustrated in the Figures, it is also possible to envisage that the arrangement comprises a plurality of espresso coffee machines and/or a plurality of coffee grinders.

Furthermore, in addition to the management and control unit shown in Figure 3, the arrangement may comprise other apparatuses able to communicate with the filter holder assembly, among which there can be mentioned, by way of non-exclusive example, one or more weighing devices, one or more pressers, one or more mobile devices such as smartphones and tablets.

## Claims

1. Arrangement comprising at least one espresso coffee machine (100) and at least one coffee grinder (200), wherein said at least one espresso coffee machine comprises a plurality of brewing groups (140) and also comprises a corresponding plurality of filter holder assemblies (1), each comprising at least one filter holder (1') and a respective filter (1"), carried by said filter holder and adapted to contain the desired dose of coffee powder, wherein said coffee grinder (200) comprises a grinding chamber (204) for grinding coffee beans and obtaining coffee powder to be dispensed to one of said filter holder assemblies (1), wherein said espresso coffee machine (100) is configured to prepare a plurality of different coffee-based drinks according to different recipes, wherein said espresso coffee machine (100) further comprises an electronics (101) equipped with communication devices (103), wherein said coffee grinder (200) further comprises an electronics (201) equipped with communication devices (203), wherein one or more of said filter holder assemblies (1) comprise an electronics (11) equipped with a memory (15), in which the parameters of one or more of said recipes are stored, and with communication devices (13), said communication devices (13) of said electronics (11) of said filter holder assembly (1) being able to communicate with said communication devices (103) of said electronics (101) of said espresso coffee machine (100) in order to communicate to said espresso coffee machine the data necessary for preparing a selected recipe, and also being able to communicate with said communication devices (203) of said electronics (201) of said coffee grinder (200) in order to communicate to said coffee grinder the data necessary for preparing said selected recipe.

2. Arrangement according to claim 1, wherein all said filter holder assemblies (1) comprise an electronics (11) provided with a memory (15), in which the parameters of said recipes are stored, and with communication devices (13), said communication devices (13) of said electronics (11) of said filter holder assemblies (1) being able to communicate with said communication devices (103) of said electronics (101) of said espresso coffee machine (100) and also being able to communicate with said communication devices (203) of said electronics (201) of said coffee grinder (200).

3. Arrangement according to claim 1 or 2, wherein said electronics (11) is located in the front portion of the filter holder (1') of said filter holder assembly (1).

4. Arrangement according to claim 1 or 2, wherein said electronics (11) is located in the filter (1") of said filter holder assembly (1).

5. Arrangement according to claim 1 or 2, further comprising an external management and control unit (300), wherein said external management and control unit is provided with an electronics (301) equipped with communication devices (303), and wherein said communication devices (13) of said electronics (11) of said filter holder assembly(ies) (1) are able to communicate with said communication devices (303) of said electronics (301) of said external management and control unit (300).

6. Arrangement according to claim 1 or 2, further comprising one or more accessory devices, wherein each of said accessory devices is provided with an electronics equipped with communication devices, and wherein said communication devices (13) of said electronics (11) of said filter holder assembly(ies) (1) are able to communicate with said communication devices of said electronics of said accessory devices.

7. Arrangement according to claim 6, wherein said accessory devices comprise one or more automatic pressers and/or one or more automatic weighing devices.

8. Arrangement according to claim 1 or 2, wherein, at each brewing, said filter holder assembly(ies) is/are able to compare a plurality of reference values stored in said memory (15) with the actual values measured during brewing.

9. Arrangement according to claim 8, in which the said filter holder assembly(ies) is/are arranged to impart instructions to said espresso coffee machine and/or to said coffee grinder for carrying out corrective actions in the event that the difference between one or more of said actual values and the respective reference value is greater than a predetermined threshold.

10. Method for the operation of an arrangement according to any one of claims 1 - 9, comprising the following steps:
- a coffee-based drink is selected from a plurality of coffee-based drinks that can be prepared by the espresso coffee machine (100);
- the selection made is communicated to the filter holder assembly (1) inserted in a brewing group (140) of the espresso coffee machine (100), said filter holder assembly having stored in its memory (15) all the parameters relating to the recipe of the selected drink;
- the filter holder assembly (1) is connected to the coffee grinder (200) and communicates to said coffee grinder the characteristics required for the coffee powder necessary for the preparation of the selected recipe or of all the recipes stored in said memory;
- if necessary, among the recipes stored in the memory of the filter holder assembly, the recipe corresponding to the selected drink is selected;
- the settings of the grinding chamber of the coffee grinder (200) are correspondingly modified and the coffee powder with the required characteristics is produced and dispensed to the filter holder assembly;
- the filter holder assembly is transferred to the espresso coffee machine (100) and inserted into a brewing group of said espresso coffee machine;
- the filter holder assembly communicates to the espresso coffee machine the data necessary for the preparation of the selected recipe or of all the recipes stored in said memory;
- if necessary, among the recipes stored in the memory of the filter holder assembly, the recipe corresponding to the selected drink is selected;
- the settings of the brewing group of the espresso coffee machine (100) are correspondingly modified and the coffee-based drink with the required characteristics is brewed.

11. Method according to claim 10, wherein, at each brewing of a coffee-based drink, the filter holder assembly (1) compares the reference values of the quantities involved in the execution of the recipe stored therein with the respective actual values measured during the preparation of said coffee-based drink.

12. Method according to claim 11, wherein the filter holder assembly imparts instructions to the espresso coffee machine and/or to the coffee grinder for carrying out corrective actions in the event that the difference between one or more of said actual values and the respective reference value is greater than a predetermined threshold.

## Patentansprüche

1. Anordnung mit wenigstens einer Espressokaffeemaschine (100) und wenigstens einer Kaffeemühle (200), wobei die wenigstens eine Espressokaffeemaschine mehrere Brühgruppen (140) und auch eine entsprechende Anzahl von Filterhalterbaugruppen (1) aufweist, die jeweils wenigstens einen Filterhalter (1') und einen entsprechenden Filter (1 "), der von dem Filterhalter getragen und dafür ausgelegt ist, die gewünschte Menge Kaffeepulver zu enthalten, aufweisen, wobei die Kaffeemühle (200) eine Mahlkammer (204) zum Mahlen von Kaffeebohnen und Erzeugen von Kaffeepulver zur Ausgabe an eine der Filterhalterbaugruppen (1) aufweist, wobei die Espressokaffeemaschine (100) dafür ausgelegt ist, mehrere verschiedene Getränke auf Kaffeebasis nach verschiedenen Rezepten zuzubereiten, wobei die Espressokaffeemaschine (100) zudem eine Elektronik (101), die mit Kommunikationsvorrichtungen (103) ausgerüstet ist, aufweist, wobei die Kaffeemühle (200) zudem eine Elektronik (201) aufweist, die mit Kommunikationsvorrichtungen (203) ausgerüstet ist, wobei eine oder mehrere der Filterhalterbaugruppen (1) eine Elektronik (11) aufweisen, die mit einem Speicher (15), in dem die Parameter von einem oder mehreren der Rezepte gespeichert sind, und mit Kommunikationsvorrichtungen (13) ausgerüstet ist, wobei die Kommunikationsvorrichtungen (13) die Elektronik (11) der Filterhalterbaugruppe (1) mit den Kommunikationsvorrichtungen (103) der Elektronik (101) der Espressokaffeemaschine (100) kommunizieren können, um der Espressokaffeemaschine die Daten zu übermitteln, die zum Zubereiten eines ausgewählten Rezeptes erforderlich sind, und auch mit den Kommunikationsvorrichtungen (203) der Elektronik (201) der Kaffeemühle (201) kommunizieren können, um der Kaffeemühle die Daten zu übermitteln, die zum Zubereiten des ausgewählten Rezeptes erforderlich sind.

2. Anordnung nach Anspruch 1, wobei alle diese Filterhalterbaugruppen(1) eine Elektronik (11) aufweisen, die mit einem Speicher (15), in dem die Parameter der Rezepte gespeichert sind, und mit Kommunikationsvorrichtungen (13) ausgerüstet sind, wobei die Kommunikationsvorrichtungen (13) der Elektronik (11) der Filterhalterbaugruppen (1) mit den Kommunikationsvorrichtungen (103) der Elektronik (101) der Espressokaffeemaschine (100) kommunizieren können und auch mit den Kommunikationsvorrichtungen (203) der Elektronik (201) der Kaffeemühle (200) kommunizieren können.

3. Anordnung nach Anspruch 1 oder 2, wobei die Elektronik (11) in dem vorderen Abschnitt des Filterhalters (1') der Filterhalterbaugruppe (1) angeordnet ist.

4. Anordnung nach Anspruch 1 oder 2, wobei die Elektronik (11) in dem Filter (1 ") der Filterhalterbaugruppe (1) angeordnet ist.

5. Anordnung nach Anspruch 1 oder 2, zusätzlich mit einer externen Steuer- und Betätigungseinheit (300), wobei die externe Steuerung- und Betätigungseinheit mit einer Elektronik (301) versehen ist, die mit Kommunikationsvorrichtungen (303) ausgerüstet ist, und wobei die Kommunikationsvorrichtungen (13) der Elektronik (11) der Filterhalterbaugruppe(n) (1) mit den Kommunikationsvorrichtungen (303) der Elektronik (301) der externen Steuerung- und Betätigungseinheit (300) kommunizieren können.

6. Anordnung nach Anspruch 1 oder 2, zusätzlich mit einer oder mehreren Zubehörvorrichtungen, wobei jede der Zubehörvorrichtungen mit einer Elektronik versehen ist, die mit Kommunikationsvorrichtungen ausgerüstet ist, und wobei die Kommunikationsvorrichtungen (13) der Elektronik (11) der Filterhalterbaugruppe(n) (1) mit den Kommunikationsvorrichtungen der Elektronik der Zubehörvorrichtungen kommunizieren können.

7. Anordnung nach Anspruch 6, wobei die Zubehörvorrichtungen eine oder mehrere automatische Pressen und/oder eine oder mehrere automatische Wiegevorrichtungen aufweisen.

8. Anordnung nach Anspruch 1 oder 2, wobei bei jedem Aufbrühen die Filterhalterbaugruppe(n) mehrere in dem Speicher (15) gespeicherte Referenzwerte mit aktuellen Werten, die während dem Aufbrühen gemessen wurden, vergleichen kann/können.

9. Anordnung nach Anspruch 8, in der die Filterhalterbaugruppe(n) dafür ausgelegt ist/sind, der Espressokaffeemaschine und/oder der Kaffeemühle Instruktionen zu liefern, um korrigierende Handlungen auszuführen, falls der Unterschied zwischen einem oder mehreren der aktuellen Werte und dem entsprechenden Referenzwert größer als ein vorgegebenen Schwellenwert ist.

10. Verfahren zum Betreiben einer Anordnung nach einem der Ansprüche 1 bis 9 mit den folgenden Schritten:
- aus mehreren Getränken auf Kaffeebasis, die von der Espressokaffeemaschine (101) zubereitet werden können, wird ein Getränk auf Kaffeebasis ausgewählt,
- die vorgenommene Auswahl wird der Filterhalterbaugruppe (1), die in eine Brühgruppe (140) der Espressokaffeemaschine (100) eingesetzt ist, mitgeteilt, wobei alle sich auf das Rezept beziehenden Parameter des ausgewählten Getränks in dem Speicher (15) der Filterhalterbaugruppe gespeichert sind,
- die Filterhalterbaugruppe (1) wird an die Kaffeemühle (200) angeschlossen und teilt der Kaffeemühle die Charakteristika mit, die das Kaffeepulver erforderlich sind, das für die Zubereitung des ausgewählten Rezeptes oder von allen in dem Speicher gespeicherten Rezepte benötigt wird,
- falls erforderlich, aus den in dem Speicher der Filterhalterbaugruppe gespeicherten Rezepte das Rezept ausgewählt wird, das dem ausgewählten Getränk entspricht,
- die Einstellungen der Mahlkammer der Kaffeemühle (200) entsprechend angepasst und das Kaffeepulver mit den benötigten Merkmalen produziert und an die Filterhalterbaugruppe abgegeben wird,
- die Filterhalterbaugruppe zu der Espressokaffeemaschine (100) bewegt und in eine der Brühgruppe der Espressokaffeemaschine eingesetzt wird,
- die Filterhalterbaugruppe der Espressokaffeemaschine die Daten mitteilt, die zur Zubereitung des ausgewählten Rezepts oder von allen in dem Speicher gespeicherten Rezepte benötigt werden,
- falls erforderlich, aus den in dem Speicher der Filterhalterbaugruppe gespeicherten Rezepten das dem ausgewählten Getränke entsprechende Rezept ausgewählt wird,
- die Einstellungen der Brühgruppe der Espressokaffeemaschine (100) entsprechend modifiziert und das Getränk auf Kaffeebasis mit den erforderlichen Charakteristika zubereitet wird.

11. Verfahren nach Anspruch 10, wobei bei jedem Aufbrühen eines Getränks auf Kaffeebasis die Filterhalterbaugruppe (1) die Referenzwerte der Mengen, die in der Abarbeitung des darin gespeicherten Rezeptes involviert sind, mit den entsprechenden aktuellen Werten, die während der Zubereitung des Getränks auf Kaffeebasis gemessen wurden, vergleicht.

12. Verfahren nach Anspruch 11, wobei die Filterhalterbaugruppe Instruktionen an die Espressokaffeemaschine und/oder die Kaffeemühle übermittelt, um korrigierende Handlungen auszuführen, falls der Unterscheid zwischen einem oder mehreren der aktuellen Werte und der entsprechenden Referenzwert grösser als der vorgegebene Schwellenwert ist.

## Revendications

1. - Agencement comprenant au moins une machine à café expresse (100) et au moins un moulin à café (200), ladite au moins une machine à café expresse comprenant une pluralité de groupes d'infusion (140) et comprenant également une pluralité correspondante d'ensembles porte-filtres (1), chacun comprenant au moins un porte-filtre (1') et un filtre respectif (1"), porté par ledit porte-filtre et apte à contenir la dose souhaitée de café en poudre, ledit moulin à café (200) comprenant une chambre de mouture (204) pour moudre des grains de café et obtenir un café en poudre à distribuer à l'un desdits ensembles porte-filtres (1), ladite machine à café expresse (100) étant configurée pour préparer une pluralité de boissons à base de café différentes selon différentes recettes, ladite machine à café expresse (100) comprenant en outre une électronique (101) équipée de dispositifs de communication (103), ledit moulin à café (200) comprenant en outre une électronique (201) équipée de dispositifs de communication (203), un ou plusieurs desdits ensembles porte-filtres (1) comprenant un électronique (11) équipée d'une mémoire (15), dans laquelle les paramètres d'une ou plusieurs recettes sont stockés, et de dispositifs de communication (13), lesdits dispositifs de communication (13) de ladite électronique (11) dudit ensemble porte-filtre (1) étant aptes à communiquer avec lesdits dispositifs de communication (103) de ladite électronique (101) de ladite machine à café expresse (100) afin de communiquer, à ladite machine à café expresse, les données nécessaires pour préparer une recette sélectionnée, et étant également aptes à communiquer avec lesdits dispositifs de communication (203) de ladite électronique (201) dudit moulin à café (200) afin de communiquer, audit moulin à café, les données nécessaires pour préparer ladite recette sélectionnée.

2. - Agencement selon la revendication 1, dans lequel tous lesdits ensembles porte-filtres (1) comprennent une électronique (11) comportant une mémoire (15), dans laquelle les paramètres desdites recettes sont stockés, et des dispositifs de communication (13), lesdits dispositifs de communication (13) de ladite électronique (11) desdits ensembles porte-filtres (1) étant aptes à communiquer avec lesdits dispositifs de communication (103) de ladite électronique (101) de ladite machine à café expresse (100), et étant également aptes à communiquer avec lesdits dispositifs de communication (203) de ladite électronique (201) dudit moulin à café (200).

3. - Agencement selon la revendication 1 ou 2, dans lequel ladite électronique (11) est située dans la partie avant du porte-filtre (1') dudit ensemble porte-filtre (1).

4. - Agencement selon la revendication 1 ou 2, dans lequel ladite électronique (11) est située dans le filtre (1") dudit ensemble porte-filtre (1).

5. - Agencement selon la revendication 1 ou 2, comprenant en outre une unité de gestion et de commande externe (300), ladite unité de gestion et de commande externe comportant une électronique (301) équipée de dispositifs de communication (303), et lesdits dispositifs de communication (13) de ladite électronique (11) dudit ou desdits ensembles porte-filtres (1) étant aptes à communiquer avec lesdits dispositifs de communication (303) de ladite électronique (301) de ladite unité de gestion et de commande externe (300).

6. - Agencement selon la revendication 1 ou 2, comprenant en outre un ou plusieurs dispositifs accessoires, chacun desdits dispositifs accessoires comportant une électronique équipée de dispositifs de communication, et lesdits dispositifs de communication (13) de ladite électronique (11) dudit ou desdits ensembles porte-filtres (1) étant aptes à communiquer avec lesdits dispositifs de communication de ladite électronique desdits dispositifs accessoires.

7. - Agencement selon la revendication 6, dans lequel lesdits dispositifs accessoires comprennent un ou plusieurs presseurs automatiques et/ou un ou plusieurs dispositifs de pesée automatiques.

8. - Agencement selon la revendication 1 ou 2, dans lequel, à chaque infusion, ledit ou lesdits ensembles porte-filtres sont aptes à comparer une pluralité de valeurs de référence stockées dans ladite mémoire (15) aux valeurs réelles mesurées pendant l'infusion.

9. - Agencement selon la revendication 8, dans lequel ledit ou lesdits ensembles porte-filtres sont agencés pour transmettre des instructions à ladite machine à café expresse et/ou audit moulin à café pour effectuer des actions correctives dans le cas où la différence entre une ou plusieurs desdites valeurs réelles et la valeur de référence respective est supérieure à un seuil prédéterminé.

10. - Procédé de fonctionnement d'un agencement selon l'une quelconque des revendications 1 à 9, comprenant les étapes suivantes :
- une boisson à base de café est sélectionnée parmi une pluralité de boissons à base de café qui peuvent être préparées par la machine à café expresse (100) ;
- la sélection effectuée est communiquée à l'ensemble porte-filtre (1) introduit dans un groupe d'infusion (140) de la machine à café expresse (100), ledit ensemble porte-filtre ayant, stockés dans sa mémoire (15), tous les paramètres relatifs à la recette de la boisson sélectionnée ;
- l'ensemble porte-filtre (1) est relié au moulin à café (200) et communique, audit moulin à café, les caractéristiques requises pour le café en poudre nécessaire pour la préparation de la recette sélectionnée ou de toutes les recettes stockées dans ladite mémoire ;
- si nécessaire, parmi les recettes stockées dans la mémoire de l'ensemble porte-filtre, la recette correspondant à la boisson sélectionnée est sélectionnée ;
- les réglages de la chambre de mouture du moulin à café (200) sont modifiés en conséquence et le café en poudre ayant les caractéristiques requises est produit et distribué à l'ensemble porte-filtre ;
- l'ensemble porte-filtre est transféré à la machine à café expresse (100) et introduit dans un groupe d'infusion de ladite machine à café expresse ;
- l'ensemble porte-filtre communique, à la machine à café expresse, les données nécessaires pour la préparation de la recette sélectionnée ou de toutes les recettes stockées dans ladite mémoire ;
- si nécessaire, parmi les recettes stockées dans la mémoire de l'ensemble porte-filtre, la recette correspondant à la boisson sélectionnée est sélectionnée ;
- les réglages du groupe d'infusion de la machine à café expresse (100) sont modifiés en conséquence et la boisson à base de café ayant les caractéristiques requises est infusée.

11. - Procédé selon la revendication 10, dans lequel, à chaque infusion d'une boisson à base de café, l'ensemble porte-filtre (1) compare les valeurs de référence des quantités impliquées dans l'exécution de la recette qui y est stockée aux valeurs réelles respectives mesurées pendant la préparation de ladite boisson à base de café.

12. - Procédé selon la revendication 11, dans lequel l'ensemble porte-filtre transmet des instructions à la machine à café expresse et/ou au moulin à café pour effectuer des actions correctives dans le cas où la différence entre une ou plusieurs desdites valeurs réelles et la valeur de référence respective est supérieure à un seuil prédéterminé.
